# EUROPÄISCHE PATENTSCHRIFT

(11) **EP 2 422 059 B1**
(45) Veröffentlichungstag und Bekanntmachung des Hinweises auf die Patenterteilung: **06.01.2016**
(21) Anmeldenummer: 10714285.3
(22) Anmeldetag: 20.04.2010
(51) Int. Cl.: F01N 3/28

(54) **BLECHLAGE MIT ANTI-DIFFUSIONSSTRUKTUREN UND METALLISCHER WABENKÖRPER MIT MINDESTENS EINER SOLCHEN BLECHLAGE**
SHEET-METAL LAYER COMPRISING ANTI-DIFFUSION STRUCTURES AND METALLIC HONEYCOMB BODY COMPRISING AT LEAST ONE SUCH SHEET-METAL LAYER
COUCHE FORMÉE D'UNE TÔLE COMPRENANT DES STRUCTURES ANTI-DIFFUSION, ET CORPS MÉTALLIQUE EN NID-D'ABEILLES PRÉSENTANT AU MOINS UNE TELLE COUCHE FORMÉE D'UNE TÔLE

(30) Priorität: 24.04.2009 DE 102009018825
(43) Veröffentlichungstag der Anmeldung: 29.02.2012
(73) Patentinhaber: Continental Automotive GmbH, 30165 Hannover (DE)
(72) Erfinder: ALTHÖFER, Kait, 51674 Wiehl (DE); WIERES, Ludwig, 51491 Overath (DE); VOIT, Michael, 51375 Leverkusen (DE); SEELIGER, Stefan, 99947 Alterstedt (DE); KURTH, Ferdi, 53894 Mechernich (DE)
(86) Internationale Anmeldenummer: PCT/EP2010/055161
(87) Internationale Veröffentlichungsnummer: WO 2010/122003

(56) Entgegenhaltungen:
- EP-A1- 0 434 539
- US-A- 5 118 477
- US-A- 5 157 010

## Beschreibung

Die vorliegende Erfindung betrifft das Gebiet der metallischen Wabenkörper, wie sie insbesondere in Abgasreinigungsanlagen bei Kraftfahrzeugen und Verbrennungsmotoren eingesetzt werden. Typischerweise werden metallische Wabenkörper aus Blechlagen gewickelt oder geschichtet, wobei sich im Allgemeinen im Wesentlichen glatte Blechlagen mit gewellten oder ähnlich strukturierten Blechlagen abwechseln. Auf diese Weise entstehen für Abgas durchlässige Kanäle mit jeweils an die Anwendungsfälle angepasster Größe und Form. Typische Wabenkörper für Abgasreinigungsanlagen haben zwischen 50 und 1000 cpsi (cells per square inch) also 50 bis 1000 Kanäle pro Quadratinch Querschnittsfläche. Besonders bevorzugt werden solche Wabenkörper mit einer Beschichtung versehen, die katalytisch aktive und/oder adsorbierende Eigenschaften hat. In einem Abgassystem sind Wabenkörper zur Abgasreinigung hohen mechanischen und thermischen Wechselbelastungen ausgesetzt, weshalb die Bleche untereinander verlötet werden, meist durch Hochtemperatur-Vakuumlöten. Moderne metallische Wabenkörper sind nicht an allen Verbindungslinien zwischen glatten und strukturierten Blechlagen miteinander verlötet, sondern je nach den Anforderungen an Elastizität und Stabilität nur an ausgewählten Stellen nach festgelegten Lötplänen verbunden, wodurch die Lebensdauer stark erhöht werden kann.

Bei typischen Lötprozessen werden jedoch so hohe Temperaturen angewendet, beispielsweise oberhalb von 1100 °C, dass sich zwischen Berührungsstellen von Blechen, auch wenn dort kein Lotmaterial vorhanden ist, Diffusionsverbindungen ausbilden, wodurch der Wabenkörper nicht die durch einen bestimmten Lötplan erwünschten Eigenschaften erhält, sondern zu steif und unelastisch wird. Es wurden daher unterschiedliche Verfahren entwickelt, wie Lot an ganz bestimmten ausgewählten Stellen aufgebracht werden kann und Diffusionsverbindungen an nicht beloteten Stellen unterbunden werden. Die Verhinderung von Diffusionsverbindungen kann relativ teure zusätzliche Voroxidationsprozesse oder andere zusätzliche Bearbeitungsschritte zur Erzeugung einer Passivierungsschicht erfordern und/oder die Anwendung nur bestimmter Materialien erfordern.

Weiterhin ist es aus dem Stand der Technik bekannt, glatte und/oder gewellte Blechlagen in einem metallischen Wabenkörper mit Mikrostrukturen zu versehen. Ein Grund dafür kann die Beeinflussung der Strömung im Wabenkörper sein, da Mikrostrukturen ab einer bestimmten Größenordnung zu Turbulenzen und einer besseren Durchmischung einer Gasströmung führen, als dies bei laminaren Strömungen der Fall wäre. Solche Mikrostrukturen sind beispielsweise in der EP 0 784 507 B1 beschrieben.

Aus der WO 02/090734 sind auch Strukturen bekannt, die ein besseres Gleiten von Blechlagen aufeinander erlauben, was beim Herstellungsprozess Vorteile haben kann. In dieser Schrift werden auch schon Vorteile durch scharf begrenzte Lötverbindungen beschrieben.

Auch aus der WO 97/35683 sind Mikrostrukturen, insbesondere als Prägungen an den Wellenbergen von gewellten Blechen bekannt, die in diesem Falle die Einbringungen einer genügenden Menge von Lot an den Verbindungslinien ermöglichen sollen.

Hoch belastbare Wabenkörper können z. B. gemäß der WO 2005/107992 A1 oder der WO 2005/021198 A1 ganz gezielt an bestimmten Stellen mit Leim oder Bindemittel bedruckt werden, was eine bis zu diesen Verfahren nicht bekannte Präzision bei der Festlegung und Ausführung auch komplizierter Lötpläne zulässt. Trotz dieser Möglichkeiten zur Herstellung genauer definierter kleinflächiger Lötverbindungen zwischen glatten und strukturierten, insbesondere gewellten, Blechlagen, konnte das Problem der zusätzlichen Diffusionsverbindungen in manchen Fällen nicht zufriedenstellend gelöst werden.

Weiterhin sei auch auf die US 5,157,010 verwiesen, die einen mit Blechen gebildeten Katalysator-Trägerkörper offenbart. Dort wird vorgeschlagen, zumindest einen Teil der Bleche mit einer Mikrostrukturen auszuführen, die quer oder in einem Winkel zur Strömungsrichtung des Abgases durch den Katalysator-Trägerkörper verlaufen und einen vorgegeben Abstand in Strömungsrichtung zueinander aufweisen. Diese Mikrostrukturen sind so ausgebildet, dass sie lokale Geschwindigkeitsänderungen nahe der Kanalwand in dem Katalysator-Trägerkörper generieren.

Eine Blechlage für einen katalytischen Konverter mit einer unterbrochenen Mikrostruktur geht schließlich noch aus der EP 0 434 539 A1 hervor. Die Mikrostruktur in den (flachen) Blechlagen dient insbesondere der Fixierung bzw. Ausrichtung der benachbarten (gewellten) Blechlagen, die mit einer kreuzenden Struktur versehen sind.

Aufgabe der vorliegenden Erfindung ist es, die mit Bezug auf den Stand der Technik geschilderten Probleme zumindest teilweise zu lösen und insbesondere eine im Wesentlichen glatte Blechlage mit Mikrostrukturen, hier auch als Anti-Diffusionsstrukturen bezeichnet, anzugeben, die es ermöglicht, Lötverbindungen nach ganz bestimmten Lötplänen zwischen dieser Blechlage und angrenzenden strukturierten Blechlagen herzustellen, ohne dass zusätzliche ausgedehnte Diffusionsverbindungen entstehen, auch wenn hohe Löttemperaturen angewendet werden. Auch soll ein unter Verwendung mindestens eines solchen Bleches hergestellter Wabenkörper angegeben werden.

Zur Lösung dieser Aufgaben dienen eine Blechlage gemäß Anspruch 1 und ein Wabenköper gemäß Anspruch 6. Vorteilhafte Ausgestaltungen, die einzeln oder in Kombination miteinander angewendet werden können, sind in den jeweils abhängigen Ansprüchen und der Beschreibung angegeben.

Eine erfindungsgemäße Blechlage besteht aus einem hochtemperaturkorrosionsfesten Stahl, insbesondere mit Chrom- und Aluminiumanteilen, mit einer Längsrichtung, mit einer Oberseite und einer Unterseite und mit einer Dicke von 0,015 bis 0,1 mm, vorzugsweise 0,02 bis 0,06 mm, wobei die Blechlage in Längsrichtung oder in einem spitzen Winkel zur Längsrichtung verlaufende unterbrochene Mikrostrukturen aufweist.

Die Mikrostrukturen haben eine Strukturhöhe, eine auf halber Strukturhöhe außen gemessene Strukturlänge und eine auf halber Strukturhöhe außen gemessene Strukturbreite und untereinander einen auf halber

Strukturhöhe gemessenen Längsabstand zur nächsten etwa in ihrer Längsrichtung fluchtenden Mikrostruktur, der durch Unterbrechungen gebildet wird, und einen zwischen den Strukturmitten gemessenen Seitenabstand zur jeweils nächsten seitlich benachbarten Mikrostruktur.

Dabei sind die Mikrostrukturen teilweise zur Oberseite und teilweise zur Unterseite aus der Blechlage herausragend gestaltet.

Die Mikrostrukturen sind außerdem so beabstandet, angeordnet und gestaltet, dass jede senkrecht zur Längsrichtung über die Blechlage verlaufende gerade theoretische Linie mindestens zwei zur Oberseite und zwei zur Unterseite herausragende Mikrostrukturen schneidet.

Zudem gelten folgende Beziehungen:
- die Strukturhöhe beträgt 0,02 bis 0,1 mm, vorzugsweise 0,06 bis 0,08 mm,
- die Strukturlänge beträgt 2 bis 10 mm, vorzugsweise 4 bis 6 mm,
- die Strukturbreite beträgt 0,2 bis 1 mm, vorzugsweise etwa 0,5 mm,
- der Längsabstand zur nächsten etwa ihrer Längsrichtung fluchtenden Mikrostruktur ist größer als 2 mm, vorzugsweise 4 bis 8 mm,
- der Seitenabstand beträgt 1 bis 10 mm, vorzugsweise 2 bis 6 mm.

Eine so strukturierte Blechlage ist trotz der Mikrostrukturen im Wesentlichen glatt und aufgrund der Unterbrechungen zwischen den Mikrostrukturen und wegen der geringen Strukturhöhe auch flexibel genug für übliche Fertigungsprozesse von metallischen Wabenkörpern. Die Mikrostrukturen bewirken beim abwechselnden Schichten oder Wickeln von erfindungsgemäßen Blechlagen mit strukturierten, insbesondere gewellten, Blechen, dass nur präzise definierte Berührungsstellen zwischen den gewellten und glatten Blechlagen entstehen. Unter diesen Berührungsstellen können nun solche ausgewählt werden, die nach einem vorgegebenen Lötplan durch Aufbringen von Lot und Durchführen eines Lötprozesses miteinander verbunden werden sollen. Aufgrund der Tatsache, dass die Mikrostrukturen Berührungen zwischen anderen Stellen verhindern, kann es nicht zu unerwünschten linienförmigen Diffusionsverbindungen kommen, so dass Wabenkörper mit präzise festgelegten Eigenschaften besser reproduzierbar hergestellt werden können.

Die im Anspruch 1 angegebenen Kombinationen der Maße sind für die Funktionstüchtigkeit der Erfindung wichtig. Zwar besteht eine gewisse Variationsbreite für jedes einzelne Maß, jedoch ist eine bestimmte Mindesthöhe der Mikrostrukturen erforderlich, damit tatsächlich in den nicht strukturierten Bereichen keine Berührungen und daraus entstehende Diffusionsverbindungen möglich sind. Anderseits dürfen die Mikrostrukturen nicht zu hoch sein, da die Steifigkeit einer Blechlage mit der Höhe von Mikrostrukturen zunimmt. Auch die Unterbrechungen zwischen den Mikrostrukturen dienen der Flexibilität.

Beim Schichten oder Wickeln von erfindungsgemäßen Blechlagen mit benachbarten gewellten Blechlagen ist es erforderlich, dass keine Wellenberge direkt linienförmig auf der Oberseite oder Unterseite der Blechlage aufliegen, da dies gerade zu unerwünschten ausgedehnten Diffusionsverbindungen führen könnte. Die Anti-Diffusionsstrukturen müssen daher so angeordnet sein, dass jede benachbarte Wellung auf mindestens zwei Mikrostrukturen definiert aufliegt. Daher müssen die Mikrostrukturen teilweise zur Oberseite und teilweise zur Unterseite der Blechlage ausgebildet sein und in Längsrichtung so lang und in verschiedenen Reihen angeordnet so gegeneinander versetzt sein, dass diese Bedingung erfüllt werden kann. Obwohl man sich grundsätzlich diese Bedingung auch bei chaotischer Anordnung von Mikrostrukturen vorstellen kann, führen realistische Herstellungsverfahren zu einer periodischen Anordnung der Mikrostrukturen in benachbarten Reihen, wobei allerdings relativ große Freiheiten in der Anzahl der Reihen, der Muster, mit denen Mikrostrukturen zur Oberseite und zur Unterseite ausgebildet werden, und bezüglich der Längen und Abstände der Mikrostrukturen bestehen. Typische Ausführungsbeispiele werden anhand der Zeichnung noch näher erläutert.

In einer bevorzugten Ausführungsform sind die Mikrostrukturen daher in Reihen etwa parallel zur Längsrichtung angeordnet, und der Längsabstand zwischen zwei Mikrostrukturen einer Reihe beträgt 2 bis 8 mm, vorzugsweise 4 bis 6 mm.

Erfindungsgemäß werden die Mikrostrukturen bevorzugt durch Prägen hergestellt, insbesondere in einem einzigen Prägeschritt. Prägen ist ein relativ preisgünstiges Verfahren, welches leicht in bekannte Herstellungsprozesse von Wabenkörpern integriert werden kann.

Bevorzugt werden alle Mikrostrukturen mindestens in einer Reihe zur Oberseite ausgebildet, während alle Mikrostrukturen mindestens einer benachbarten Reihe zur Unterseite herausragen. Am günstigsten ist es, wenn eine Mehrzahl solcher Reihen zur Oberseite und zur Unterseite herausragender Mikrostrukturen auf der glatten Blechlage ausgebildet ist.

Alternativ können auch die Mikrostrukturen einer Reihe abwechselnd zur Oberseite und zur Unterseite herausragen, so dass sich insbesondere eine schachbrettartige Verteilung von zur Oberseite und zur Unterseite herausragenden Mikrostrukturen ergibt.

Wie bereits ausgeführt, sind Unterbrechungen zwischen den Mikrostrukturen für die Flexibilität einer erfindungsgemäßen Blechlage von Vorteil, wobei es wegen dieser Unterbrechungen erforderlich ist, die Mikrostrukturen unterschiedlicher Reihen in Längsrichtung gegeneinander versetzt anzuordnen, vorzugsweise um einen Betrag, der kleiner oder gleich der Strukturlänge ist. Auf diese Weise kann verhindert werden, dass Bereiche entstehen, in denen keine Mikrostrukturen vorhanden sind und wo Wellenberge benachbarter Blechlagen auf ihrer ganzen Länge die glatte Blechlage berühren könnten.

Die gestellte Aufgabe wird auch gelöst durch einen gelöteten Wabenkörper, insbesondere für Abgaskatalysatoren, gewickelt und/oder geschichtet aus abwechselnden Lagen von im Wesentlichen glatten und gewellten Blechlagen, wobei mindestens eine der glatten Blechlagen mit Mikrostrukturen wie oben beschrieben ausgebildet ist und wobei zwischen den gewellten und glatten Blechlagen Lötverbindungen im Wesentlichen nur an Berührungsstellen der gewellten Blechlagen mit den Mikrostrukturen vorhanden sind. Alle Bauformen von Wabenkörpern, die sich nach dem Stand der Technik aus glatten und strukturierten Blechlagen herstellen lassen, können auch unter Verwendung der hier beschriebenen Blechlage mit Antidiffusionsstrukturen nach den bekannten Verfahren hergestellt werden. Auch die bisher bekannten Lötverfahren können generell angewendet werden, jedoch ist es von besonderem Vorteil, hochpräzise selektive Belotungsverfahren anzuwenden, insbesondere z. B. die in der WO 2005/021198 A1 oder der WO 2005/107992 A1 beschriebenen Verfahren. Dabei ist es aufgrund der hohen im Stand der Technik schon erreichten Präzision der Platzierung von Lotmaterial möglich, die Strukturen einer strukturierten Blechlage an gewünschten Stellen zu beloten und/oder die Wellenberge einer erfindungsgemäßen glatten Blechlage mit Mikrostrukturen an den gewünschten Stellen zu beloten. Auf diese Weise entstehen zunächst nach einem vorgegebenen Plan mit Leim versehene Berührungsstellen in der Größenordnung von jeweils weniger als 1 mm² Fläche, die anschließend mit Lotpulver beaufschlagt und in einem üblichen Lötprozess verlötet werden können. Im Unterschied zum Stand der Technik entstehen durch die erfindungsgemäße Blechlage keine unerwünschten ausgedehnten Diffusionsverbindungen an nicht beloteten Stellen im Wabenkörper. Die schon vorhandenen oder in Zukunft erarbeiteten Lötpläne für ganz bestimmte Belastungsformen und Eigenschaften können auf diese Weise mit hoher Präzision und ohne störende zusätzliche Diffusionsverbindungen verwirklicht werden, wodurch Qualität und Lebensdauer von metallischen Wabenkörpern auch für Anwendungen mit extremen Belastungen möglich sind. Zwar können Diffusionsverbindungen an Berührungsstellen ohne Lot entstehen, jedoch kann dies einerseits durch Verwendung geeigneter Muster der Mikrostrukturen auf eine geringe Zahl reduziert werden. Andererseits sind Diffusionsverbindungen sehr kleiner Fläche weniger kritisch für die Eigenschaften eines Wabenkörpers, weil sie bei geringen Zug- oder Scherkräften wieder aufbrechen, was bei linienförmigen längeren Verbindungen nicht der Fall ist.

Bevorzugt wird durch geeignete Beleimungsverfahren erreicht, dass eine Vielzahl von benachbarten Paaren verlöteter Kontaktstellen 9 mit einem Abstand von weniger als 5 mm, vorzugsweise weniger als 3 mm, entstehen, wobei die zu einem Paar gehörenden Berührungsstellen entlang eines Wellenberges aber auf verschiedenen Mikrostrukturen liegen. Durch Lötpläne mit jeweils zwei oder auch drei benachbarten Verbindungsstellen wird die Sicherheit erhöht, dass selbst bei einzelnen Produktionsungenauigkeiten noch genügend gute Verbindungen entsprechend der gewünschten Verteilung entstehen.

Trotz der Anti-Diffusionsstrukturen entstehen wegen deren geringer Strukturhöhe in dem Wabenkörper keine Spalte zwischen glatten und gewellten Blechen, die bei einer späteren Beschichtung mit einem Washcoat und/oder katalytisch aktivem Material stören würden.

Ausführungsbeispiele der Erfindung, auf die diese jedoch nicht beschränkt ist, sowie das technische Umfeld, werden in teilweise schematischer Darstellung anhand der Zeichnung näher erläutert. Es zeigen:
- Fig. 1:: schematisch einen Wabenkörper während seiner Entstehung mit einer erfindungsgemäßen Blechlage mit Anti-Diffusionsstrukturen,
- Fig. 2:: schematisch einen Schnitt durch Fig. 1 entlang der Linie II - II, und
- Fig. 3:: einen vergrößerten Querschnitt durch eine Mikrostruktur

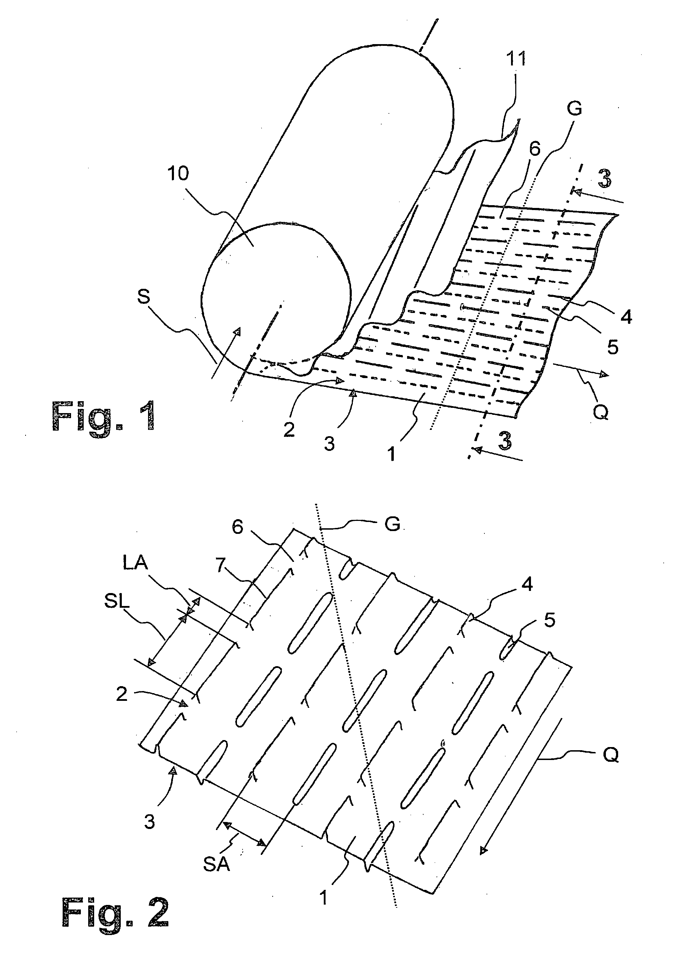

Fig. 1 zeigt schematisch einen noch nicht ganz fertig gewickelten Wabenkörper 10, der mindestens eine erfindungsgemäße im wesentlichen glatte Blechlage 1 mit einer Oberseite 2 und einer Unterseite 3 enthält, die sich in einer Längsrichtung Q erstreckt. Die Längsrichtung Q liegt quer zu einer späteren Durchströmungsrichtung S des Wabenkörpers 10. Die Blechlage 1 ist mit zur Oberseite herausragenden Mikrostrukturen 4 und mit zur Unterseite herausragenden Mikrostrukturen 5 versehen. Die Mikrostrukturen 4, 5 haben, wie sich aus den folgenden Figuren genauer ergibt, eine Strukturhöhe SH, eine auf halber Strukturhöhe SH außen gemessene Strukturlänge SL und eine auf halber Strukturhöhe SH außen gemessene Strukturbreite SB und sind untereinander beabstandet mit einem auf halber Strukturhöhe SH außen gemessenen Längsabstand LA in Längsrichtung Q, der durch Unterbrechungen 6 gebildet wird. Zwischen den Mikrostrukturen 4, 5 besteht ein zwischen den Strukturmitten gemessener Seitenabstand SA zur jeweils nächsten benachbarten Reihe von Mikrostrukturen. Die Mikrostrukturen, 4 in einer ersten Reihe R1 sind alle zur Oberseite 2 der Blechlage 1 ausgebildet, während die Mikrostrukturen 5 in einer zweiten Reihe R2 alle zur Unterseite 3 der Blechlage 1 ausgebildet sind. Diese Anordnung der Reihen wiederholt sich periodisch mit abwechselnd zur Oberseite 2 und zur Unterseite 3 ausgerichteten Mikrostrukturen 4, 5. Dabei sind die Mikrostrukturen 4, 5 zumindest der Reihen, die zur gleichen Seite ausgerichtet sind, gegeneinander in Längsrichtung Q versetzt und zwar so, dass jede beliebige quer zur Längsrichtung Q über die Blechlage 1 verlaufende gerade theoretische Linie G, von denen hier nur eine angedeutet ist, mindestens zwei zur Oberseite und zwei zur Unterseite herausragende Mikrostrukturen 4, 5 schneidet. Dies bewirkt, dass Wellenberge 11 von benachbarten gewellten Blechlagen 8 später nicht zwischen den Mikrostrukturen 4, 5 zu liegen kommen können. Die Strukturlänge SL kann vorteilhafter Weise größer gewählt werden als der Abstand zwischen zwei Wellenbergen einer benachbarten gewellten Blechlage 8, wodurch sichergestellt werden kann, dass fast beliebige gewünschte Lötpläne verwirklicht werden können.

Fig. 2 veranschaulicht die Anordnung der Anti-Diffusionsstrukturen in einer erfindungsgemäßen im Wesentlichen glatten Blechlage 1. Die zur Oberseite 2 ausgebildeten Mikrostrukturen 4 wechseln sich mit zur Unterseite 3 ausgebildeten Mikrostrukturen 5 ab, wobei die Mikrostrukturen, 4, 5 in Reihen R1, R2, ..., Rn) angeordnet sind. Reihen mit zu einer Seite herausragenden Mikrostrukturen 4, 5 sind in Längsrichtung gegeneinander verschoben, und zwar vorzugsweise um einen Betrag, der kleiner ist als die Strukturlänge SL der Mikrostrukturen.

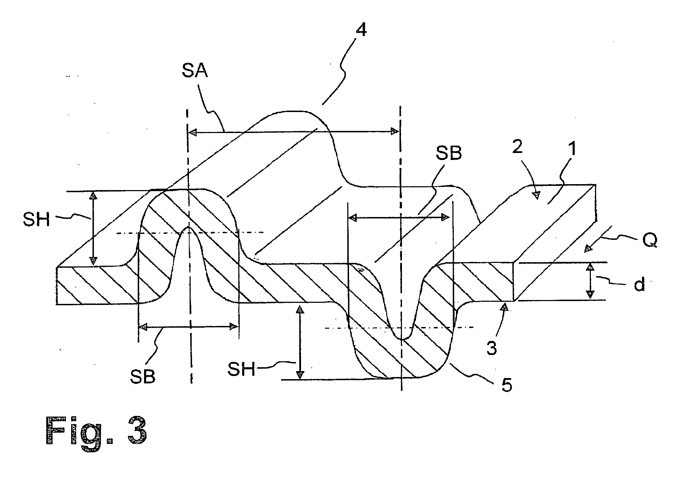

In Fig. 3 sind in vergrößerter Form die Bemaßungen und ungefähren Größenverhältnisse der Mikrostrukturen 4, 5 dargestellt. Da insbesondere bei Prägungen nicht von einer idealen Quaderform der Mikrostrukturen 4, 5 ausgegangen werden kann, sind die Bemaßungen auf geeignete Bezugspunkte bezogen. Die Strukturhöhe SH gibt an, wie hoch sich eine Mikrostruktur 4, 5 über die Oberfläche der Blechlage 1 erhebt. Die Strukturbreite SH ist sinnvoller Weise außen auf halber Höhe der Mikrostrukturen 4, 5 definiert, ebenso die Strukturlänge SL und Längsabstand LA zur nächsten fluchtenden Mikrostruktur 4, 5. Der Seitenabstand SA zur nächsten benachbarten Mikrostruktur 4, 5 lässt sich leichter zwischen den Mitten der Mikrostrukturen 4, 5 definieren.

Beim Beleimen und Beloten eines erfindungsgemäßen Wabenkörpers kann, wie beispielsweise in der WO 2005/021198 A1 beschrieben, Haftmittel in Form von Haftmitteltropfen auf eine gewellte Blechlage 8 aufgetragen werden. Der Haftmittelauftrag erfolgt in Regionen, die direkt benachbart zu Wellenbergen 11 sind. Wird nämlich ein Wabenkörper aus gewellten Blechlagen 8 und im wesentlichen glatten Blechlagen 1 aufgebaut, so kommt es beim Wickeln bzw. Verwinden der Lagen 1, 8 zu einer Relativbewegung der Lagen 1, 8 zueinander. Dies führt zu einem Rutschen der gewellten Blechlagen 8 auf den im wesentlichen glatten Blechlagen 1. Wäre nun Haftmittel direkt auf die Wellenberge 11 aufgetragen, so würde dies die Gleitreibung zwischen den Lagen 1, 8 erhöhen und zu einem Verschmieren des Haftmittels führen. Jedoch müssen die Berührungsstellen zwischen der gewellten Blechlage 8 und den Mikrostrukturen 4, 5 eines erfindungsgemäßen Wabenkörpers miteinander verbunden werden. Es muss also Haftmittel so aufgetragen werden, dass es nach dem Wickeln oder Schichten des Wabenkörpers in der Nähe der Berührungsstellen zwischen Wellenbergen der gewellten Blechlage 8 und den Mikrostrukturen 4, 5 zur Verfügung steht. Die aufgetragenen Bereiche an Haftkleber sollten daher entlang der Wellenberge 11 ausgedehnter sein als der Seitenabstand SA von zwei zur Berührung zur Verfügung stehenden Mikrostrukturen 4, 5, damit jeweils wenigstens eine Berührungsstelle, vorzugsweise zwei benachbarte, sicher belotet und verlötet werden können. Dies erfolgt durch Beaufschlagen mit Lotpulver und späteres Hartlöten. Bei Kontakt zwischen der gewellten Blechlage 8 und den Mikrostrukturen 4, 5 bilden sich um die Kontaktstellen 9 stabile Lötzwickel aus. Andere Beleimungs- und Belotungsverfahren mit ähnlichen Ergebnissen sind jedoch ebenfalls anwendbar.

Die vorliegende Erfindung ermöglicht eine genau reproduzierbare Herstellung von metallischen Wabenkörpern aus gewellten und im Wesentlichen glatten Blechen auch mit komplizierten Lötplänen, ohne dass störende zusätzliche linienförmige Diffusionsverbindungen entstehen. Dadurch können Wabenkörper genau an bestimmte Anwendungen angepasst werden, was ihre Lebensdauer erhöht.

### Bezugszeichenliste

- 1: im Wesentlichen glatte Blechlage
- 2: Oberseite der Blechlage 1
- 3: Unterseite der Blechlage 1
- 4: Mikrostruktur zur Oberseite 2 hervorstehend
- 5: Mikrostruktur zur Unterseite 3 hervorstehend
- 6: Unterbrechung
- 7: Bergrücken
- 8: gewellte Blechlage
- 9: Kontaktstelle
- 10: Wabenkörper
- 11: Wellenberg

- d: Blechdicke
- Q: Längsrichtung
- S: Durchströmungsrichtung des Wabenkörpers 10
- G: theoretische gerade Linie
- SH: Strukturhöhe
- SL: Strukturlänge
- SB: Strukturbreite
- LA: Längsabstand
- SA: Seitenabstand

## Patentansprüche

1. Blechlage (1) aus einem hochtemperaturkorrosionsfesten Stahl für einen metallischen Wabenkörper (10), insbesondere mit Chrom- und Aluminiumanteilen, mit einer Längsrichtung (Q) und mit einer Oberseite (2) und einer Unterseite (3) und mit einer Dicke (d) von 0,015 bis 0,1 mm, vorzugsweise 0,02 bis 0,06 mm, wobei die Blechlage (1) in Längsrichtung (Q) oder in einem spitzen Winkel zur Längsrichtung (Q) verlaufende unterbrochene Mikrostrukturen (4, 5) aufweist, und folgende Merkmale hat:
a. die Mikrostrukturen (4, 5) haben eine Strukturhöhe (SH), eine auf halber Strukturhöhe außen gemessene Strukturlänge (SL) und eine auf halber Strukturhöhe außen gemessene Strukturbreite (SB) und untereinander einen auf halber Strukturhöhe gemessenen Abstand (SA) zur nächsten etwa in ihrer Längsrichtung fluchtenden Mikrostruktur (4, 5), der durch Unterbrechungen (6) gebildet wird, und einen zwischen den Strukturmitten gemessenen Seitenabstand (SA) zur jeweils nächsten seitlich benachbarten Mikrostruktur (4, 5);
b. die Mikrostrukturen (4, 5) sind teilweise zur Oberseite (2) und teilweise zur Unterseite (3) aus der Blechlage (1) herausragend gestaltet;
wobei die Blechlage durch folgende Merkmale gekennzeichnet ist:
c. die Mikrostrukturen (4, 5) sind so beabstandet, angeordnet und gestaltet, dass jede senkrecht zur Längsrichtung (Q) über die Blechlage (1) verlaufende gerade theoretische Linie (G) mindestens zwei zur Oberseite (2) und zwei zur Unterseite (3) herausragende Mikrostrukturen (4, 5) schneidet; wobei
d. folgende Beziehungen gelten:
- die Strukturhöhe (SH) beträgt 0,02 bis 0,1 mm, vorzugsweise 0,06 bis 0,08 mm,
- die Strukturlänge (SL) beträgt 2 bis 10 mm, vorzugsweise 4 bis 6 mm,
- die Strukturbreite (SB) beträgt 0,2 bis 1 mm, vorzugsweise etwa 0,5 mm,
- der Längsabstand (LA) zur nächsten etwa ihrer Längsrichtung fluchtenden Mikrostruktur ist größer als 2 mm, vorzugsweise 4 bis 8 mm,
- der Seitenabstand (SA) zur nächsten seitlich benachbarten Mikrostruktur (4, 5) beträgt 1 bis 10 mm, vorzugsweise 2 bis 6 mm.

2. Blechlage (1) nach Anspruch 1, **dadurch gekennzeichnet, dass** die Mikrostrukturen (4, 5) in Reihen (R1, R2, ....., Rn) etwa parallel zur Längsrichtung Q angeordnet sind, und dass der Längsabstand (LA) zwischen zwei Mikrostrukturen einer Reihe 2 bis 8 mm, vorzugsweise 4 bis 6 mm, beträgt.

3. Blechlage (1) nach Anspruch 1 oder 2, **dadurch gekennzeichnet, dass** die Mikrostrukturen (4, 5) geprägt sind, vorzugsweise in einem einzigen Prägeschritt.

4. Blechlage (1) nach Anspruch 2 oder 3, **dadurch gekennzeichnet, dass** alle Mikrostrukturen (4) mindestens einer Reihe (R1) zur Oberseite (2) herausragen, während alle Mikrostrukturen mindestens einer benachbarten Reihe (R2) zur Unterseite (3) herausragen.

5. Blechlage (1) nach einem der Ansprüche 2 bis 4, **dadurch gekennzeichnet, dass** die Mikrostrukturen (4, 5) unterschiedlicher Reihen (R1, R2, R3,....., Rn) in Längsrichtung (Q) gegeneinander versetzt sind, vorzugsweise um einen Betrag, der kleiner oder gleich der Strukturlänge (SL) ist.

6. Gelöteter Wabenkörper (10), insbesondere für Abgasreinigungssysteme von Kraftfahrzeugen, gewickelt und/oder geschichtet aus abwechselnden Lagen von im wesentlichen glatten (1) und gewellten (8) Blechlagen, wobei mindestens eine der glatten Blechlagen (1) mit Mikrostrukturen (4, 5) gemäß einem der vorhergehenden Ansprüche ausgebildet ist und wobei zwischen den gewellten (8) und glatten (1) Blechlagen Lötverbindungen im wesentlichen nur an Berührungsstellen (9) der gewellten Blechlagen (8) mit den Mikrostrukturen (4, 5) vorhanden sind.

7. Gelöteter Wabenkörper (10) nach Anspruch 6, **dadurch gekennzeichnet, dass** eine Vielzahl von benachbarten Paaren verlöteter Kontaktstellen (9) mit einem Abstand von weniger als 5 mm, vorzugsweise weniger als 3 mm, vorhanden ist, wobei die zu einem Paar gehörenden Berührungsstellen entlang eines Wellenberges (11) aber auf verschiedenen Mikrostrukturen (4, 5) liegen.

## Claims

1. Sheet-metal layer (1) made of a high-temperature-corrosion-resistant steel for a metallic honeycomb body (10), containing chrome and aluminum fractions in particular, having a longitudinal direction (Q) and a top side (2) and a bottom side (3) and a thickness (d) of 0.015 to 0.1 mm, preferably 0.02 to 0.06 mm, wherein the sheet-metal layer (1) comprises discontinuous microstructures (4, 5) extending in the longitudinal direction (Q) or at an acute angle to the longitudinal direction (Q), and has the following features:
a. the microstructures (4, 5) have a structure height (SH), a structure length (SL) measured on the outside at half the structure height, and a structure width (SB) measured on the outside at half the structure height, and among each other a spacing (LA), measured at half the structure height, with respect to the nearest microstructure (4,5) aligned approximately in the longitudinal direction thereof, said spacing being formed by interruptions (6), and a lateral spacing (SA), measured between the structure centers, with respect to the nearest laterally adjacent microstructure (4, 5);
b. the microstructures (4, 5) are designed so that some of the microstructures project out of the sheet-metal layer (1) toward the top side (2) and some of the microstructures project out of the sheet-metal layer toward the bottom side (3);
wherein the sheet-metal layer is **characterized by** the following features:
c. the microstructures (4, 5) are spaced, arranged, and designed in such a way that each straight theoretical line (G) extending across the sheet-metal layer (1) perpendicularly to the longitudinal direction (Q) intersects at least two microstructures (4, 5) projecting toward the top side (2) and two microstructures projecting toward the bottom side (3); wherein
d. the following relations apply:
- the structure height (SH) is 0.02 to 0.1 mm, preferably 0.06 to 0.08 mm,
- the structure length (SL) is 2 to 10 mm, preferably 4 to 6 mm,
- the structure width (SB) is 0.2 to 1 mm, preferably approximately 0.5 mm,
- the longitudinal spacing (LA) with respect to the nearest microstructure aligned approximately in the longitudinal direction thereof is greater than 2 mm, preferably 4 to 8 mm,
- the lateral spacing (SA) with respect to the nearest laterally adjacent microstructure (4, 5) is 1 to 10 mm, preferably 2 to 6 mm.

2. Sheet-metal layer (1) according to Claim 1, **characterized in that** the microstructures (4, 5) are arranged in rows (R1, R2, ....., Rn) approximately parallel to the longitudinal direction Q, and **in that** the longitudinal spacing (LA) between two microstructures in one row is 2 to 8 mm, preferably 4 to 6 mm.

3. Sheet-metal layer (1) according to Claim 1 or 2, **characterized in that** the microstructures (4, 5) are stamped, preferably in a single stamping step.

4. Sheet-metal layer (1) according to Claim 2 or 3, **characterized in that** all the microstructures (4) in at least one row (R1) project toward the top side (2), while all the microstructures in at least one adjacent row (R2) project toward the bottom side (3).

5. Sheet-metal layer (1) according to one of Claims 2 to 4, **characterized in that** the microstructures (4, 5) belonging to different rows (R1, R2, R3,....., Rn) are offset relative to one another in the longitudinal direction (Q), preferably by an amount which is less than or equal to the structure length (SL).

6. Soldered honeycomb body (10), in particular for exhaust gas purification systems on motor vehicles, wound and/or layered from alternating layers of substantially smooth (1) and corrugated (8) sheet-metal layers, wherein at least one of the smooth sheet-metal layers (1) is designed with microstructures (4, 5) according to one of the preceding claims, and wherein there are soldered joints between the corrugated (8) and smooth (1) sheet-metal layers substantially only at contact points (9) between the corrugated sheet-metal layers (8) and the microstructures (4, 5).

7. Soldered honeycomb body (10) according to Claim 6, **characterized in that** there is a multiplicity of adjacent pairs of soldered contact points (9) at a spacing of less than 5 mm, preferably less than 3 mm, wherein the contact points belonging to a pair are situated along the same corrugation peak (11) but on different microstructures (4, 5).

## Revendications

1. Couche (1) de tôle en un acier résistant à la corrosion à haute température pour un corps (10) en nid-d'abeilles métallique, ayant notamment des parties en chrome et en aluminium, ayant une direction (Q) longitudinale et une face (2) supérieure et une face (3) inférieure et une épaisseur (d) de 0,015 à 0,1 mm, de préférence de 0,02 à 0,06 mm, la couche (1) de tôle ayant des microstructures (4, 5) interrompues s'étendant dans la direction (Q) longitudinale ou faisant un angle aigu avec la direction (Q) longitudinale et ayant les caractéristiques suivantes :
a. les microstructures (4, 5) ont une hauteur (SH), une longueur (SL) mesurée à l'extérieur sur la demi-hauteur et une largeur (SB) mesurée à l'extérieur sur la demi-hauteur et une distance (SA) entre elles mesurée sur la demi-hauteur à la microstructure (4, 5) voisine à peu près alignée dans la direction longitudinale, qui est formée par des interruptions (6), et une distance (SA) latérale mesurée entre les milieux des structures à la microstructure (4, 5) immédiatement voisine latéralement ;
b. les microstructures (4, 5) font saillie en partie de la face (2) supérieure et en partie de la face (3) inférieure de la couche (1) de tôle ;
la couche de tôle étant **caractérisée par** les caractéristiques suivantes :
c. les microstructures (4, 5) sont écartées, disposées et conformées de manière à ce que chaque ligne (G) droite théorique s'étendant perpendiculairement à la direction (Q) longitudinale sur la couche (1) de tôle coupe au moins deux microstructures (4, 5) en saillie de la face (2) supérieure et deux microstructures (4, 5) en saillie de la face (3) inférieure ; en ayant
d. les relations suivantes :
- la hauteur (SH) va de 0,02 à 0,1 mm, de préférence de 0,06 à 0,08 mm,
- la longueur (SL) va de 2 à 10 mm, de préférence de 4 à 6 mm,
- la largeur (SB) va de 0,2 à 1 mm, en étant de préférence d'environ 0,5 mm,
- la distance (LA) longitudinale à la microstructure suivante à peu près alignée dans la direction longitudinale est plus grande que 2 mm, en allant de préférence de 4 à 8 mm,
- la distance (SA) latérale à la microstructure (4, 5) suivante voisine latéralement va de 1 à 10 mm, en allant de préférence de 2 à 6 mm.

2. Couche (1) de tôle suivant la revendication 1, **caractérisée en ce que** les microstructures (4, 5) sont disposées en rangées (R1, R2, ..., Rn) à peu parallèlement à la direction Q longitudinale et **en ce que** la distance (LA) longitudinale entre deux microstructures d'une rangée va de 2 à 8 mm, de préférence de 4 à 6 mm.

3. Couche (1) de tôle suivant la revendication 1 ou 2, **caractérisée en ce que** les microstructures (4, 5) sont estampées, de préférence dans un stade d'estampage unique.

4. Couche (1) de tôle suivant la revendication 2 ou 3, **caractérisée en ce que** toutes les microstructures (4) d'au moins une rangée (R1) font saillie de la face (2) supérieure, tandis que toutes les microstructures d'au moins une rangée (R2) voisine font saillie de la face (3) inférieure.

5. Couche (1) de tôle suivant l'une des revendications 2 à 4, **caractérisée en ce que** les microstructures (4, 5) de rangées (R1, R2, R3, ..., Rn) différentes sont décalées les unes par rapport aux autres dans la direction (Q) longitudinale, de préférence d'une valeur qui est inférieure ou égale à la longueur (SL).

6. Corps (10) en nid-d'abeilles brasé, notamment pour des systèmes d'épuration de gaz d'échappement de véhicule automobile, enroulé et/ou stratifié composé de couches en alternance de couches sensiblement planes (1) et ondulées (8), au moins l'une des couches (1) de tôle planes ayant des microstructures (4, 5) suivant l'une des revendications précédentes et, entre les couches de tôle ondulées (8) et planes (1), il y a des brasures sensiblement seulement aux points (9) de contact des couches (8) de tôles ondulées avec les microstructures (4, 5).

7. Corps (10) en nid-d'abeilles brasé suivant la revendication 6, **caractérisé en ce qu'**il y a une pluralité de paires voisines de points (9) de contact brasés à une distance de moins de 5 mm, de préférence de moins de 3 mm, les points de contact appartenant à une paire se trouvant le long d'un sommet (11) d'ondulation, mais sur des microstructures (4, 5) différentes.
